# EUROPEAN PATENT APPLICATION

(11) **EP 4 081 000 A1**
(43) Date of publication of application: **26.10.2022**
(21) Application number: 21170279.0
(22) Date of filing: 23.04.2021
(51) Int. Cl.: H05K 1/02, B30B 15/06, B30B 15/34, H05K 3/46, H05K 3/00, H05K 3/02

(54) **THERMAL MANAGEMENT FOR HEAT- AND PRESSURE-INDUCED LAMINATION OF PANELS FOR MANUFACTURING COMPONENT CARRIERS**

(71) Applicant: AT & S Austria Technologie & Systemtechnik Aktiengesellschaft, 8700 Leoben-Hinterberg (AT)
(72) Inventor: TAO, Qi, 8700 Leoben (AT); KRIVEC, Thomas, 8740 Zeltweg (AT); IBRAHIM, Azmi, Shanghai 201108 (CN)
(74) Representative: Dilg, Haeusler, Schindelmann Patentanwaltsgesellschaft mbH

(57) **Abstract**

It is disclosed an arrangement and a method for carrying out a thermal management during a heat- and pressure-induced lamination process of panels (130) in a press book stack-up (100) for manufacturing component carriers (550). The press book stack-up (100) of the arrangement comprises (a) two heating plates (110); (b) a stack of a plurality panels (130) placed between the heating plates (110); (c) a plurality of separator sheets (120) being located between adjacent panels (130) of the stack; and (d) a plurality of thermal conduction structures (560, 660, 760) arranged in and/or at the panels (130, 530, 630, 730). The thermal conduction structures (560, 660, 760) are configured so that a spatial temperature distribution within the respective panel (130, 530, 630, 730) and/or between different panels (130, 530, 630, 730) is at least partially changed.

## Description

### Field of invention

The present invention generally relates to the technical field of manufacturing component carriers with laminated panels. In particular, the present invention relates to a lamination technique for panels within a so called press book arrangement wherein a plurality of panels are sandwiched between two outer heating plates and between respectively two panels there is arranged a separator sheet.

### Art Background

A component carrier such as a Printed Circuit Boards (PCB) is a support structure for at least one electronic component forming an electronic assembly respectively an electronic circuit. A component carrier comprises a layer composition of at least one electrically insulating or dielectric layer structure and at least one electrically conductive layer structure, typically made from a metal such as copper. Such a layer composition is also denominated a panel.

Conductor traces representing an interconnecting wiring are formed by means of an appropriate structuring or patterning of the electrically conductive layer structure which is provided on top or beneath an electrically insulating layer of a component carrier. An electronic component may be mounted on an upper or lower surface of a component carrier. In some applications, an electronic component is embedded at least partially within (the volume of) a component carrier.

A multilayer component carrier is a laminated panel consisting of several (patterned) electrically conductive layer structures and several electrically insulating or dielectric layer structures in an alternating sequence. For electrically connecting different electrically conductive layer structures there may be used metallized vias extending at least through one electrically insulating layer.

An efficient way for producing laminated panels is the so called press book technique, wherein in between two heating plates there is arranged a stack comprising a plurality of panels which are separated from each other by means of respectively one separator plate. By heating up the heating plates the temperature within the stack is increased. Further, by compressing the heating plates the stack is pressurized and the heat- and pressure assisted lamination process is carried out. This procedure can be repeated with (expanded) panels which comprise a previously laminated panel and one or two additional electrically insulating or dielectric layer structures which are arranged above and/or below the previously laminated panel. Again, respectively one separator plate has to be arranged between two (expanded) panels.

In view of the increasing miniaturization of electronic assemblies there is a tendency that component carriers are getting thinner. Hence, also thin laminated panels must be provided. For efficiency reasons the above-described press book technique should still be employed.

When laminating only thin panels the resulting panel structures often exhibit a warpage which is typically associated with the reduced stiffness of a thin panel. With a reduction of the panel thickness these warpage problems become more and more serious.

There may be a need for reducing the warpage of panels being used for manufacturing component carriers.

### Summary of the Invention

This need may be met by the subject matter according to the independent claims. Advantageous embodiments of the present invention are described by the dependent claims.

According to a first aspect of the invention there is provided an arrangement for carrying out a thermal management during a heat- and pressure-induced lamination process of panels in a press book stack-up for manufacturing component carriers, wherein the press book stack-up comprises (a) two heating plates; (b) a stack of a plurality of panels placed between the heating plates; (c) a plurality of separator sheets being located between adjacent panels of the stack; and (d) a plurality of thermal conduction structures arranged in and/or at the panels. The thermal conduction structures are configured so that a spatial temperature distribution within the respective panel and/or between different panels is at least partially changed.

The described arrangement is based on the idea that the main reason which causes an unwanted warpage of panels, in particular thin panels, is a not optimal temperature distribution inside the press book stack-up during the heat- and pressure-assisted lamination procedure. Since curing processes, which are associated with the lamination, strongly depend on the temperature of the material to be cured, an unsuited temperature distribution typically results in an uneven curing degree. It has been found out that this uneven curing degree, wherein the curing degree varies in particular within or along a main plane of the panel / component carrier, is the direct reason for unwanted warpage. However, it is mentioned that also a spatial temperature variation perpendicular to the main planes of the panel may result in uneven curing and hence in unwanted warpage.

Descriptively speaking, with the described thermal management of the press book, electrically insulating or dielectric layer structure such as prepregs can be cured more evenly. This results in less internal stress which in turn produces less warpage of the panels and of course also of the component carriers which are generated from the laminated panels by means of appropriate singulation procedures.

It is pointed out that the temperature distribution may vary as a function of time during a heat assisted lamination process which involves the mentioned curing. In this context it should be recognized that each heat treatment requires of course a certain ramp-up phase for the temperature of the material to be cured until a desired temperature is reached. In most applications also a temperature ramp-down phase occurs after the desired temperature has been maintained for a certain or predefined period of time. In this context it has been found out that the spatial temperature variations within the material to be cured is especially large during the temperature ramp-up phase of the laminating process. Hence, the described thermal conduction structures should be configured for providing a heat flow which changes the spatial temperature variations in particular during such a ramp-up phase. This can be achieved by a short thermal response time which means that even comparatively small temperature variations are equalized in a fast manner. Such a short thermal response time can be achieved by choosing a material for the thermal conduction structures which material comprises a large heat conductivity.

Preferably, within the described press book stack-up there is located / sandwiched one separator sheet between each pair of two neighboring or adjacent panels. The like holds true for the thermal conduction structures, wherein preferably for each panel there is provided at least one thermal conduction structure.

The described thermal conduction structures could be inserted or embedded within the panels. Alternatively or in combination, the thermal conduction structures could be provided at the surface of the panels. In this context the thermal conduction structures could be assigned to the panels or to the respective separator sheet. This means that when assembling the stack of panels with the separator sheets in between the (neighboring) panels the thermal conduction structures can be attached to the panels or to the separator sheets. When being attached to the panels the thermal conduction structures could form a part of the finally laminated panels. When being attached to the separator sheets the thermal conduction structures could stay at the separator sheets. After adding further (uncured) electrically insulating or dielectric layer structures, in particular prepreg structures, to the previously laminated panel in order to increase the layer count, the thermal conduction structures attached to the separator sheets can then be used for changing a spatial temperature distribution within the added further dielectric layer / prepreg structures during a next curing process in a suitable manner which, at the end, results in a reduced warpage.

The described change of the temperature distribution by way of a dedicated thermal management may allow to achieve, if applicable based on simulation results, the highest amount of temperature at a certain region or area of the respective panel the optimal temperature for curing. Hence, the contribution of this region / area to the overall warpage of the resulting component carrier will be minimized.

The goal of the above mentioned (optional) a simulation would be to find a way to counteract warpage by directing the heat energy within the press book to predefined regions / areas or the panels.

The described change of the temperature direction could be primarily carried out along a z direction, i.e. from outer panels to inner panels within the press book, as well as secondly in x/y direction across individual panels towards the region / area that is most in need of heat energy and/or away from the region / area most sensitive to heat energy.

According to an embodiment of the invention the thermal conduction structures are configured so that a spatial temperature distribution within the respective panel and/or between different panels is at least partially homogenized.

The described temperature homogenization, which is probably the simplest option for a temperature change, yields nevertheless good results for a warpage reduction. Corresponding simulations regarding a thermal management for achieving the at least partial temperature homogenization may be realized with comparatively simple algorithms.

According to a further embodiment of the invention the thermal conduction structures comprise thermal vias.

The thermal vias may extent along a direction being perpendicular to the main plane of the respective panel. Hence, they enhance the thermal conductivity within the stack (along a z-direction) between different neighboring panels. Specifically, thermal vias being formed within a particular panel may improve the thermal conductivity in particular between this particular panel and both the panel being formed above and the panel being formed below this particular panel. In other words, the vias being formed within the particular panel may improve the thermal conductivity between the panel being located below and the panel being located above. Of course, thermal vias may also increase, probably to a smaller extend, the thermal conductivity within the plane of the respective panel, i. e. along an x-direction and/or a y-direction both being perpendicular to the above-mentioned z-direction.

The described thermal vias may be similar to vias which in multilayer printed circuit boards (PCBs) are usually used to electrically interconnect different electrically conductive layers, which are separated from each other by at least one electrically insulating / dielectric layer. However, in accordance with the technology described in this document the vias are specifically used for thermal conduction during the lamination process.

The described vias may be formed in known manner by means of a mechanical and/or laser drilling process. Thereafter, the drilled holes are metallized or plated with a metal, preferably with copper. The metallization may cover the inner surface of the respective drilled hole. Preferably, in order to improve the thermal conductivity, the drilled holes may be completely filled with metal / copper.

Using the described vias for improving the thermal conductivity may provide the advantage that the thermal conduction structures can be realized in a simple and effective manner. Specifically, since the formation of vias is a process which is widely used in the manufacturing of PCBs, the thermal conduction structures can be realized with well-tried and proven via formation techniques.

According to a further embodiment of the invention the thermal conduction structures comprise thermal traces extending along one or both main surfaces of the panels. This may provide the advantage that the thermal conductivity in particular along directions within or parallel to the main plane of the respective panel can be improved.

The described thermal traces may be any thermally conducting structures which are formed at the top surface and/or at the bottom surface of the respective panel. Further, such thermally conducting structures may also be formed at an intermediate interface surface within two neighboring (dielectric) layers of the respective multilayer panel. Preferably, the thermally conducting structures are quasi two-dimensional (2D) or flat metallization structures which can be formed by means of a patterning and/or structuring process of an electrically and of course also thermally conductive layer structure. Such patterning or structuring processes are generally known from PCB manufacturing and are used for forming a conductor trace pattern which is used e. g. for interconnecting different electronic components of an electronic assembly formed at a PCB.

It is mentioned that for setting an appropriate thermal conductivity not only the width but also the thickness of the thermal traces can be adjusted. Further, by choosing a proper direction of the thermal traces a desired directional characteristic of the improved thermal conduction can be established which may allow for a heat conduction specifically into selected regions of the respective panel.

It is mentioned that in most cases a pattern of thermal / metal traces which results in a desired spatial thermal conduction along the plane of the respective panel does not correspond to conductor paths which are later used for electrically connecting different components of an electronic assembly. Hence, in a final (multilayer) PCB there may be present (a) metal traces which are predominately used for providing an electric conductivity and (b) metal traces which are used exclusively for providing a thermal conduction predominately along the respective trace into specific spatial region and/or into a specific spatial direction of the respective panel.

According to a further embodiment of the invention the thermal conduction structures comprise thermal blocks embedded in the panels. Depending on its geometric dimensions a thermal block may enable an improved thermal conductivity. Thereby, the degree of the thermal conductivity may depend on the cross-sectional area of the thermal block along the respective direction of the thermal conductivity. For the sake of clarity, the plane of the respective cross-sectional area is perpendicular to the respective direction of the thermal conductivity.

By choosing appropriate geometric dimensions for the thermal block(s) the directional characteristic of the desired improved heat conduction can be set in such a manner that when heating up the heating plates during a lamination process a spatial at least partially changed temperature distribution will be achieved which may result in an at least partially uniform curing behaviour and, at the final product "component carrier", a reduced warpage.

According to a further embodiment of the invention the thermal conduction structures within the stack have a spatial distribution which comprises (i) a first spatial distribution of thermal conduction structures being assigned to a first panel of the stack and (ii) a second spatial distribution of thermal conduction structures being assigned to a different second panel of the stack. Thereby, the second spatial distribution is different from the first spatial distribution. This may allow to adjust the (spatial) heat conduction specifically or individually for each plane of the stack. Hence, the degree of curing may not only be homogenized along (x- and y-) directions parallel to the main planes but also along the (z-) direction perpendicular to the main planes.

The described panel individual spatial distribution of thermal conduction structures may allow to realize a precisely defined improved heat flow within the entire (volume of the) stack. As will be elucidated below in more detail, based on a prior knowledge of the thermal conduction within the stack an appropriate distribution of thermal conduction structures can be chosen to end up with a desired homogenized curing / hardening of the panels in the respective lamination processes. Such an a priori knowledge can be obtained with thermal simulations and/or an evaluation of previously manufactured component carriers by means of a press book stack-up. Thereby, artificial intelligence (AI) can be employed in order to obtain a knowledge of the relationship between different spatial distributions and spatial curing degree distributions and/or warpage of the final PCBs along certain directions.

According to a further embodiment of the invention (i) first thermal conduction structures of at least one first layer of one panel and/or of a first panel differ in size, in shape, and/or in orientation from (ii) second thermal conduction structures of at least one second layer of the one panel and/or of a second panel.

Also the described panel specific shapes, sizes and/or orientations of the thermal conduction structures may allow to further homogenize the curing degree obtained with the lamination processes. For selecting appropriate shapes, sizes and/or orientations again an a priori knowledge may be used which may be based on thermal simulations and/or AI evaluations of the curing degree, e.g. by means of measured warpage.

According to a further embodiment of the invention a density of the thermal conduction structures is larger in an outer (circumferential or peripheral) region of a panel as compared to a central region of the same panel. This may allow, in most application cases, for a particular effective intra panel temperature homogenization during heat-assisted lamination. The basic physical reason for this spatial temperature effect along the above-mentioned x- and y-direction may be that due to geometric reasons the average (thermal) distance between a more central point of the panel and all points of the two heating plates may be smaller than the average (thermal) distance between an outer "off-center" point and all points of the two heating plates. Further, a heat dissipation / heat loss at outer peripheral regions of the stack is typically larger that at the center of the stack.

According to a further embodiment of the invention a density of the thermal conduction structures is larger in and/or at a panel being located centrally in the stack (with regard to two heating plates) as compared to a panel being located closer to one of the heating plates. This may allow, in most application cases, for a particular effective inter panel temperature homogenization during lamination. The basic physical reason for this effect along the above-mentioned z-direction may be that the spatial profile of the thermal flow along the z-direction is nonlinear. Put in descriptive words, the sum of the heat input originating from the two heating plates is not constant (also) along the z-direction. This may hold true for one or more points in time during the heat assisted lamination process.

According to a further embodiment of the invention the arrangement comprises at least one of the following features (A) and (B).
(A): A first density of the thermal conduction structures being located in first regions of the panels relating to the component carriers to be manufactured is larger than a second density of the thermal conduction structures being located in second regions of the panels, wherein the second regions are different from the first regions.
(B): At least a part of the thermal conduction structures are arranged in regions of the panels outside from the component carriers to be manufactured, for instance in regions around and/or between arrays of the panel with component carriers to be manufactured.

This density difference described with feature (A) may provide the advantage that the temperature distribution will be changed / homogenized preferred in those regions of the panels which correspond to the final product, namely the (singularized) component carrier. Thereby, the difference between the second density and the first density may depend on a compromise between (a) a small total number of thermal conduction structures and (b) a desired minimum temperature homogenization. In this context keeping the number and/or the amount of employed thermal conduction structures comparatively small may be advantageous because of a cost reduction caused by thermal conduction structures which are actually not really needed. In some use cases the second density may be zero at least on or within some subregions of the second regions.

The feature (B) according to which there are present thermal conduction structures in regions of the panels outside from the component carriers to be manufactured may narrow the temperature distribution within or along the entire respective panel. Hence, an undesired warpage of a manufactured component carrier which may result from a warpage of (waste) regions outside from the component carriers to be manufactured can be minimized.

According to a further embodiment of the invention the heating plates and/or the separator sheets are made at least partially from a material having a thermal conductivity of at least 100 W/mK, in particular at least 200 W/mK. This may narrow the spatial temperature variation within the heating plates and/or the separator sheets itself.

In this context it should be understood that a heating plate with an at least approximately uniform temperature distribution will make a contribution to a narrow temperature distribution in particular within the panels being arranged close to the heating plates. In this context it is recalled that in the above-described repetitive press book technique predominately the outer panels being located close to respectively one of the heating plates are cured because the inner panels have already been cured at least partially by means of a previous lamination process. Hence, the use of heating plates having the described high thermal conductivity may make a significant contribution to a curing improvement and, as a consequence, to a warpage reduction.

In some embodiments the heating plates, which comprise or which are thermally coupled with a heating source, e.g. a heating wire arrangement, may be made from or may comprise Aluminum, Copper, Copper-Beryllium. The same holds true for at least some of the separator sheets.

According to a further embodiment of the invention at least a part of the separator sheets comprises active heating means.

The described active heating possibility enabled by at least one separator sheet (in addition to the heating plates) may allow to effectively change / homogenize the temperature profile within the stack in particular along the z-direction. Preferably, different separator sheets can be controlled independently which may allow for adding a heat input into selected regions within the stack.

The active heating means may be realized with any appropriate resistive heating elements such as a heating wire or a heating trace. Further, also inductive materials, e. g. ferromagnetic materials, may be employed in connection with a corresponding electromagnetic radiation source. In some embodiments an electromagnetic radiation source is employed which may allow to "focus" the emitted electromagnetic radiation specifically to the region of the respective separator sheet or even to a selected subregion of the respective separator sheet.

According to a further embodiment of the invention the active heating means are arranged in the separator sheets so that a peripheral portion of the separator sheets is heated stronger than a central portion of the separator sheets. This may allow to actively compensate the above-described effect of a typically lower temperature within the peripheral regions of the panels of the stack.

According to a further embodiment of the invention the arrangement further comprises a control unit configured for controlling the active heating means individually for at least partially changing the heat distribution within the respective panels and/or between different panels.

In some embodiments the control unit comprises a temperature sensor of comprises an interface to a temperature sensor, which is arranged and configured for monitoring the temperature of the stack. Thereby, for practical reasons the temperature measurement may be limited to the outer surface or to at least one outer surface portion of the stack. In this case the temperature measurement could be realized by infrared (IR) radiation emitted from the respective portion. Such an IT temperature measurement can be realized with a spatial resolution. Hence, not only one but two or even more temperature measurement values could be used for controlling the active heating means. This may allow to realize a reliable closed loop control of the temperature during the heat- and pressure-assisted lamination process.

According to a further aspect of the invention there is provided a method for carrying out a thermal management during a heat- and pressure-induced lamination process of panels in a press book stack-up for manufacturing component carriers. The provided method comprises (a) placing a stack of panels between heating plates of the press book stack-up with separator sheets between adjacent panels of the stack; and (b) arranging thermal conduction structures in and/or at the panels so that during the lamination process a spatial temperature distribution within the respective panel and/or between different panels is at least partially changing by the thermal conduction structures.

Also the described method is based on the idea that an unwanted warpage of (thin) panels after being cured can be significantly reduced by changing a temperature distribution inside the press book stack-up during the heat-assisted lamination procedure.

With the described thermal management of a press book stack-up thin panels / component carriers having a high quality and in particular a small warpage can be manufactured. With decreasing thickness the number of panels which could be comprised by the stack of panels can be increased. In this context it should be recognized that for thermal reasons there is typically a maximal thickness of the entire press book stack-up because the larger the thickness is the longer it takes until the panels, which are located in the middle between the heating plates, reach a sufficient temperature which enables the necessary curing. Hence, the heating time required for a successful lamination process will be increased and the efficiency in component carrier manufacturing may be reduced even when taking into account that with one lamination cycle a larger number of panels will be processed.

According to an embodiment of the invention the method further comprises (a) simulating a temperature distribution in a respective one of the panels, and (b) controlling a manufacturing unit for manufacturing the panels based on the simulated temperature distribution, wherein the manufacturing unit arranges the thermal conduction structures within and/or at the respective panel for changing the simulated temperature distribution. This may allow for finding and/or for realizing an arrangement (distribution) of the thermal conduction structures which may result in an optimal spatial change of the temperature during the heat-assisted lamination procedure, which change yields a minimum warpage of the final component carrier.

The described simulation may employ an algorithm which takes into account at least one thermal model of the stack. Thereby, not only the total number of panels within the stack but also the number of already cured panels may be taken into account. The reason for this may be that an already cured panel "consumes less heat", because a heat consuming crosslinking has already taken place in already cured or hardened (resin) materials.

A thermal model may include the specific heat capacities and/or the latent heat numbers of at least some materials of the stack. With regard to the specific heat capacities in particular (patterned) metal layers, e. g. made from copper, which are included into the panels, may be taken into account for the employed thermal model. The thermal model may not only rely on the total amount of specific heat capacities and/or the latent heat number of the material of the entire stack. The thermal model may rather take into account the spatial distribution of the respective materials. This may be of advantage in particular for copper traces, which, at the final component carrier, are used for electrically connecting different components of the electronic assembly comprising the final component carrier and these components mounted thereto.

It is pointed out that in this context the term "arrangement" or "arranging" may be understood in a wide manner. Specifically, "arranging" may refer to the spatial distribution of the thermal conduction structures within and/or at the respective panel. This means that the density of the thermal conduction structures is the relevant parameter. Further, the orientation, the shape and/or the size of the thermal conduction structures, which are arranged within and/or at the respective panel, can be controlled by the manufacturing unit in order to end up with a changed temperature distribution resulting is a low warpage of the singularized component carrier.

According to a further embodiment of the invention the manufacturing unit is controlled based on control parameter values which have been obtained with an artificial intelligence (AI) algorithm. Thereby, based on training and (warpage) measurement data of final and singularized component carries an improved spatial arrangement (e. g. distribution, orientation, shape, size) of the thermal conduction structures is determined. Hence, the described arrangement of the thermal conduction structures may be determined and/or realized in an at least partial automated manner.

It has to be noted that embodiments of the invention have been described with reference to different subject matters. In particular, some embodiments have been described with reference to method type claims whereas other embodiments have been described with reference to apparatus type claims. However, a person skilled in the art will gather from the above and the following description that, unless other notified, in addition to any combination of features belonging to one type of subject matter also any combination between features relating to different subject matters, in particular between features of the method type claims and features of the apparatus type claims is considered as to be disclosed with this document.

In the following features of further embodiments of the invention are described. Further, general considerations about the technology of component carrier manufacturing and use of component carriers are presented, which could deepen the understanding of the invention.

In the context of the present application, the term "component carrier" may particularly denote any support structure which is capable of accommodating one or more components thereon and/or therein for providing mechanical support and/or electrical connectivity. In other words, a component carrier may be configured as a mechanical and/or electronic carrier for components. In particular, a component carrier may be one of a printed circuit board, an organic interposer, and an IC (integrated circuit) substrate. A component carrier may also be a hybrid board combining different ones of the above mentioned types of component carriers.

In an embodiment, the component carrier comprises a (panel) stack of at least one electrically insulating layer structure and at least one electrically conductive layer structure. For example, the component carrier may be a laminate of the mentioned electrically insulating layer structure(s) and electrically conductive layer structure(s), which has been formed with the so called press book technique of the present invention.

The component carrier, which is obtained by singularizing the respective panel, may be a plate-shaped component carrier capable of providing a large mounting surface for further components and being nevertheless very thin and compact. The term "layer structure" may particularly denote a continuous layer, a patterned layer or a plurality of non-consecutive islands within a common plane.

A plate shaped component carrier may contribute to a compact design of an electronic assembly, wherein the component carrier nevertheless provides a large basis for mounting components thereon. Furthermore, in particular a naked die as example for an embedded electronic component, can be conveniently embedded, thanks to its small thickness, into a thin plate such as a printed circuit board.

The component carrier may be configured as one of the group consisting of a printed circuit board, a substrate (in particular an IC substrate), and an interposer.

In the context of the present document, the term "printed circuit board" (PCB) may particularly denote a plate-shaped component carrier which is formed by laminating several electrically conductive layer structures with several electrically insulating layer structures, by using the press book technique. As preferred materials for PCB technology, the electrically conductive layer structures are made of copper, whereas the electrically insulating layer structures may comprise resin and/or glass fibers, so-called prepreg or FR4 material. The various electrically conductive layer structures may be connected to one another in a desired way by forming through-holes through the laminate, for instance by laser drilling or mechanical drilling, and by filling them with electrically conductive material (in particular copper), thereby forming vias as through-hole connections. Apart from one or more components which may be embedded in a printed circuit board, a printed circuit board is usually configured for accommodating one or more components on one or both opposing surfaces of the plate-shaped printed circuit board. They may be connected to the respective main surface by soldering. A dielectric part of a PCB may be composed of resin with reinforcing fibers (such as glass fibers).

In the context of the present application, the term "substrate" may particularly denote a small component carrier. A substrate may be a, in relation to a PCB, comparably small component carrier onto which one or more components may be mounted and that may act as a connection medium between one or more chip(s) and a further PCB. For instance, a substrate may have substantially the same size as a component (in particular an electronic component) to be mounted thereon (for instance in case of a Chip Size Package (CSP)). More specifically, a substrate can be understood as a carrier for electrical connections or electrical networks as well as component carrier comparable to a printed circuit board (PCB), however with a considerably higher density of laterally and/or vertically arranged connections. Lateral connections are for example conductive paths, whereas vertical connections may be for example drill holes. These lateral and/or vertical connections are arranged within the substrate and can be used to provide electrical, thermal and/or mechanical connections of housed components or unhoused components (such as bare dies), particularly of IC chips, with a printed circuit board or intermediate printed circuit board. Thus, the term "substrate" also includes "IC substrates". A dielectric part of a substrate may be composed of resin with reinforcing particles (such as reinforcing spheres, in particular glass spheres).

The substrate or interposer may comprise or consist of at least a layer of glass, silicon (Si) or a photoimageable or dry-etchable organic material like epoxy-based build-up material (such as epoxy-based build-up film) or polymer compounds like polyimide, polybenzoxazole, or benzocyclobutene-functionalized polymers.

In an embodiment, the at least one electrically insulating layer structure comprises at least one of the group consisting of resin (such as reinforced or non-reinforced resins, for instance epoxy resin or bismaleimide-triazine resin), cyanate ester resin, polyphenylene derivate, glass (in particular glass fibers, multi-layer glass, glass-like materials), prepreg material (such as FR-4 or FR-5), polyimide, polyamide, liquid crystal polymer (LCP), epoxy-based build-up film, polytetrafluoroethylene (PTFE, Teflon^{®}), a ceramic, and a metal oxide. Reinforcing structures such as webs, fibers or spheres, for example made of glass (multilayer glass) may be used as well. Although prepreg particularly FR4 are usually preferred for rigid PCBs, other materials in particular epoxy-based build-up film or photoimageable dielectric material may be used as well. For high frequency applications, high-frequency materials such as polytetrafluoroethylene, liquid crystal polymer and/or cyanate ester resins, low temperature cofired ceramics (LTCC) or other low, very low or ultra-low DK materials may be implemented in the component carrier as electrically insulating layer structure.

In an embodiment, the at least one electrically conductive layer structure comprises at least one of the group consisting of copper, aluminum, nickel, silver, gold, palladium, and tungsten. Although copper is usually preferred, other materials or coated versions thereof are possible as well, in particular coated with supra-conductive material such as graphene.

A component which may be embedded into the component carrier preferably after having been singularized from a panel manufactured with the described press book technique can be selected from a group consisting of an electrically non-conductive inlay, an electrically conductive inlay (such as a metal inlay, preferably comprising copper or aluminum), a heat transfer unit (for example a heat pipe), a light guiding element (for example an optical waveguide or a light conductor connection), an optical element (for instance a lens), an electronic component, or combinations thereof. For example, the component can be an active electronic component, a passive electronic component, an electronic chip, a storage device (for instance a DRAM or another data memory), a filter, an integrated circuit, a signal processing component, a power management component, an optoelectronic interface element, a light emitting diode, a photocoupler, a voltage converter (for example a DC/DC converter or an AC/DC converter), a cryptographic component, a transmitter and/or receiver, an electromechanical transducer, a sensor, an actuator, a microelectromechanical system (MEMS), a microprocessor, a capacitor, a resistor, an inductance, a battery, a switch, a camera, an antenna, a logic chip, and an energy harvesting unit. However, other components may be embedded in the component carrier. For example, a magnetic element can be used as a component. Such a magnetic element may be a permanent magnetic element (such as a ferromagnetic element, an antiferromagnetic element, a multiferroic element or a ferrimagnetic element, for instance a ferrite core) or may be a paramagnetic element. However, the component may also be a substrate, an interposer or a further component carrier, for example in a board-in-board configuration. The component may be surface mounted on the component carrier and/or may be embedded in an interior thereof. Moreover, also other components, in particular those which generate and emit electromagnetic radiation and/or are sensitive with regard to electromagnetic radiation propagating from an environment, may be used as component.

After having completed formation of a panel comprising a stack layer composition of electrically insulating layer structures and electrically conductive layer structures, it is possible to proceed with a surface treatment of the obtained panel or of the singularized component carrier.

In particular, an electrically insulating solder resist may be applied to one or both opposing main surfaces of the panel or component carrier in terms of surface treatment. For instance, it is possible to form such as solder resist on an entire main surface and to subsequently pattern the layer of solder resist so as to expose one or more electrically conductive surface portions which shall be used for electrically coupling the component carrier to an electronic periphery. The surface portions of the component carrier remaining covered with solder resist may be efficiently protected against oxidation or corrosion, in particular surface portions containing copper.

It is also possible to apply a surface finish selectively to exposed electrically conductive surface portions of the component carrier in terms of a surface treatment. Such a surface finish may be an electrically conductive cover material on exposed electrically conductive layer structures (such as pads, conductive tracks, etc., in particular comprising or consisting of copper) on a surface of a component carrier. If such exposed electrically conductive layer structures are left unprotected, then the exposed electrically conductive component carrier material (in particular copper) might oxidize, making the component carrier less reliable. A surface finish may then be formed for instance as an interface between a surface mounted component and the component carrier. The surface finish has the function to protect the exposed electrically conductive layer structures (in particular copper circuitry) and enable a joining process with one or more components, for instance by soldering. Examples for appropriate materials for a surface finish are Organic Solderability Preservative (OSP), Electroless Nickel Immersion Gold (ENIG), gold (in particular Hard Gold), chemical tin, nickel-gold, nickel-palladium, ENIPIG (Electroless Nickel Immersion Palladium Immersion Gold, etc.

The aspects defined above and further aspects of the present invention are apparent from the examples of embodiment to be described hereinafter and are explained with reference to the examples of embodiment. The invention will be described in more detail hereinafter with reference to examples of embodiment but to which the invention is not limited.

### Brief Description of the Drawing

Figure 1 shows a press book stack-up with two heating plates sandwiching an alternating arrangement of plurality of panels and a plurality of separator sheets.
Figure 2 is a diagram showing measured temperatures at different locations at the heating plates during a lamination process.
Figures 3a, 3b, and 3c show for different panels of the press book stack-up simulations of (a) the temperature distribution, (b) the curing degree distribution and (c) a resulting panel warpage, respectively.
Figures 4a and 4b show for different panels of a press book stack-up with heating plates made from aluminum simulations of (a) the temperature distribution and (b) the curing degree distribution, respectively.
Figure 5 shows a top view of a panel with (i) four quarter panels each comprising an array of nine component carriers and with (ii) a plurality of thermal conduction structures which are realized as thermal vias.
Figure 6 shows a top view of a panel with (i) four quarter panels each comprising an array of nine component carriers and with (ii) thermal conduction structures made from thermal traces and a thermal heat distribution pad.
Figure 7 shows in a cross sectional view a multilayer panel comprising a central core, two dielectric layers, two prepreg layers, and a plurality of embedded thermal conduction blocks.
Figure 8 shows a top view of a separator sheet with several individually controllable heating areas.

### Detailed Description

The illustration in the drawing is schematic. It is noted that in different figures, similar or identical elements or features are provided with the same reference signs or with reference signs, which are different from the corresponding reference signs only within the first digit. In order to avoid unnecessary repetitions, elements or features, which have already been elucidated with respect to a previously described embodiment, are not elucidated again at a later position of the description.

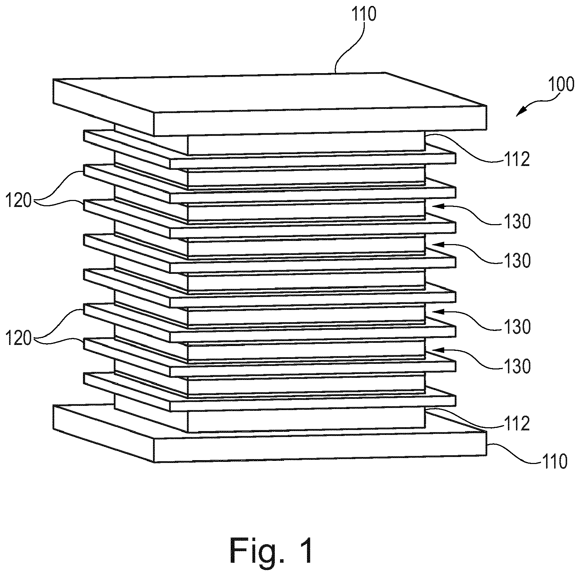

**Figure 1** shows a press book stack-up 100 configured for performing a thermal management during a heat- and pressure-induced lamination process in accordance with an embodiment of the invention. The press book stack-up comprises two heating plates 110. Heating means, which are embedded into the heating plates 110 and/or which are thermally connected with the heating plates 110 are not shown.

Above the bottom heating plate 110 and below the top heating plate 110 there is respectively arranged a paper cushion 112. In between the two paper cushions 112 there is arranged a stack comprising a plurality of panels 130 and a plurality of separator sheets 120. The panels 130 and the separator sheets 120 are arranged in alternating manner such that between respectively two neighboring panels 130 there is arranged one separator sheet 120. Also (a) between the uppermost panel 130 and the upper paper cushion 112 and (b) between the lowermost panel 130 and the lower paper cushion 112 there is provided a separator sheet 120.

In order to narrow the temperature distribution along the main surfaces of the panels 130 the heating plates 110 and the separator sheets 120 are made from a material having a high thermal conductivity of at least 100 W/mK. According to the embodiment described here the heating plates 110 and the separator sheets 120 are made at least partially from aluminum.

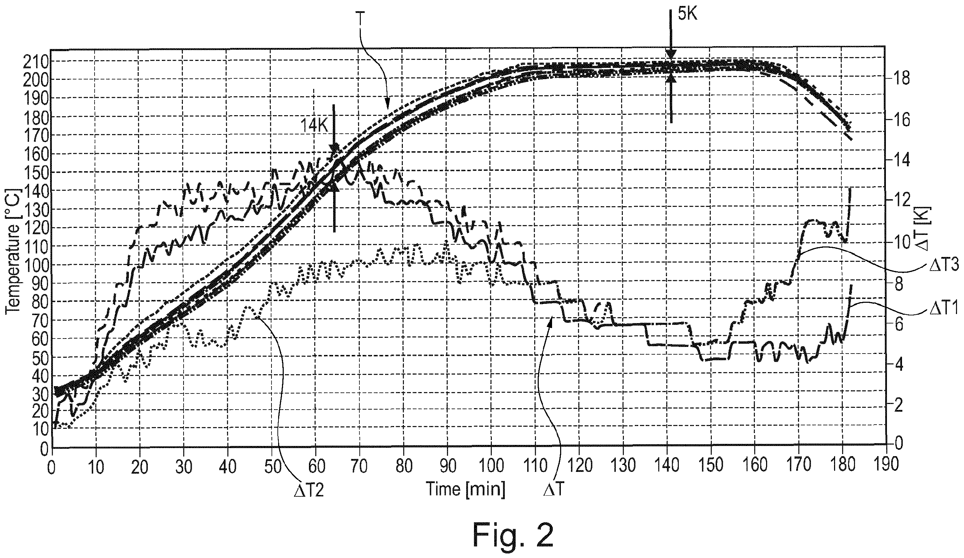

**Figure 2** is a diagram showing measured temperatures at twelve different locations at the heating plates during a lamination process. Specifically, six temperature profiles are shown in Figure 2 for six locations at the upper heating plate and six temperature profiles are shown for six locations at the lower heating plate. Due to the limited accuracy of the diagram not all twelve temperature profiles can be identified by the human eye.

As can be taken from Figure 2, the temperature profiles (as a function of time), which are indicated with reference numeral "T", start with room temperature. In the temporal course of the lamination process the temperature increases up to 200°C. A corresponding plateau is reached approximately 110 minutes after the heat-assisted lamination procedure has started. 160 minutes after the start of the lamination process the heating is stopped and the temperature decreases.

It can be taken from the measured temperature profiles that at each point in time there is always a certain temperature difference between different locations at the heating plates. During a ramp up phase, e. g. around 60 minutes after the lamination process has started, there is a maximum temperature difference of about 14 Kelvin (K). Even at the temperature plateau phase, the difference is around 5 K.

It has been recognized by the inventors that every temperature difference has an effect on the resulting curing degree, which is achieved with the heat- and pressure-assisted lamination process. Further, it has been recognized that different curing degrees within one and the same panel result in internal stress and, as a consequence, in an unwanted warpage of component carriers, which are obtained from the respective panel with a singularization process.

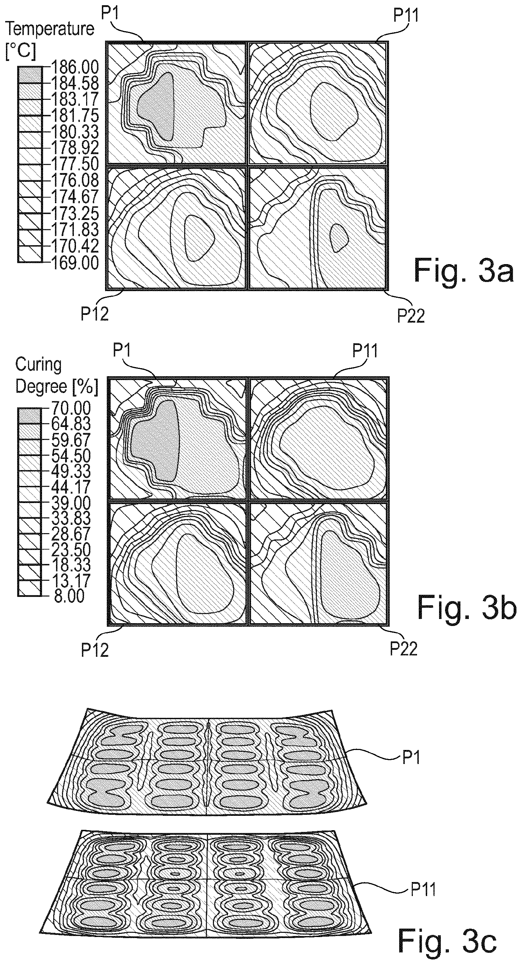

**Figures 3a, 3b, and 3c** show for different panels of the press book stack-up simulations of (a) the temperature distribution, (b) the curing degree distribution, and (c) a resulting panel warpage, respectively. The simulations have been made for a press book stack-up having 22 panels. The temperature distribution and the curing degree distribution are shown for the panels No. 1 (PI), No. 11 (PI), No. 12 (P12), and No. 22 (P22). Thereby, the panels P1 and P22 are located close to the upper and the lower heating plate, respectively. The two panels P11 and P12 are located approximately in the center region between the two heating plates.

It can be taken from Figures 3a and 3b that both the temperature variations and the curing degree variations along the main panel surface is comparatively large for the panels P1 and P22 being located close to one of the two heating plates. The corresponding temperature variations and the curing degree variations of the "inner" panels P11 and P12 are smaller but are still significant.

It can be taken from Figure 3c that the warpage of the panel P1 which has "suffered" from a comparatively large temperature variation is more pronounced than the warpage of the panel P11 which has "suffered" from a smaller temperature variation.

From these simulations it becomes clear that a good thermal management inside the press book stack-up can be an effective way to reduce the unwanted warpage. There are basically many different possibilities to do so. For instance, one could use heating plates and/or separator plates with higher thermal conductivity which improves a temperature equalization along the main surface of the respectively adjacent panel. An increased thermal conductivity could be obtained for changing the material of the heating plates and/or the separator sheets from e. g. steel (15W/mK) to e. g. aluminum (≥ 200W/mK), a copper beryllium alloy, or copper (≥ 400W/mK).

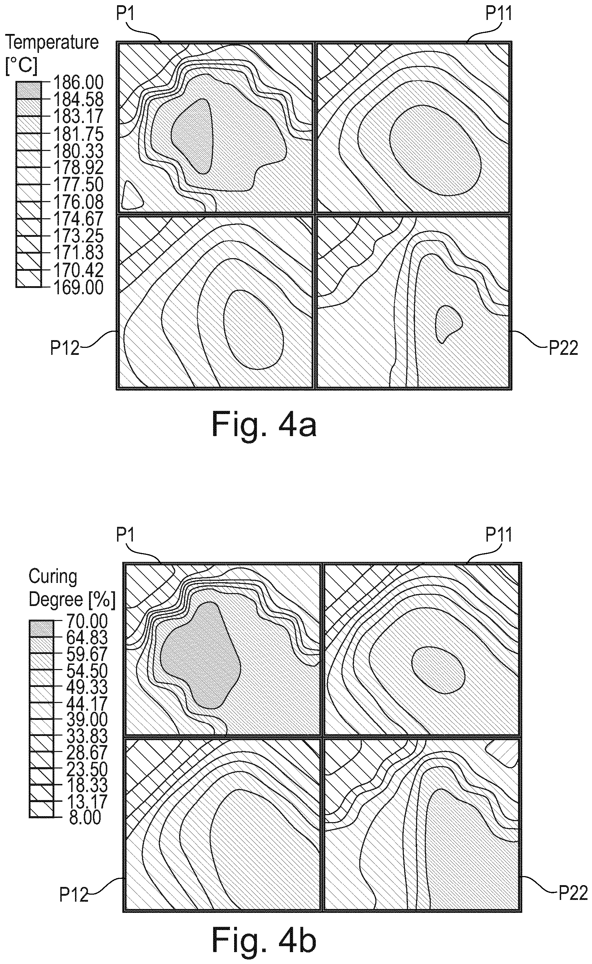

**Figures 4a and 4b** show for different panels of a press book stack-up with heating plates made from aluminum simulations of (a) the temperature distribution and (b) the curing degree distribution, respectively. A comparison with the corresponding simulations shown in Figures 3a and 3b, respectively, where heating plates made from steel are used, shows that both the temperature variations and the curing degree variations are significantly smaller. It should be clear that this results in a reduced warpage of the final product "component carrier" / "PCB".

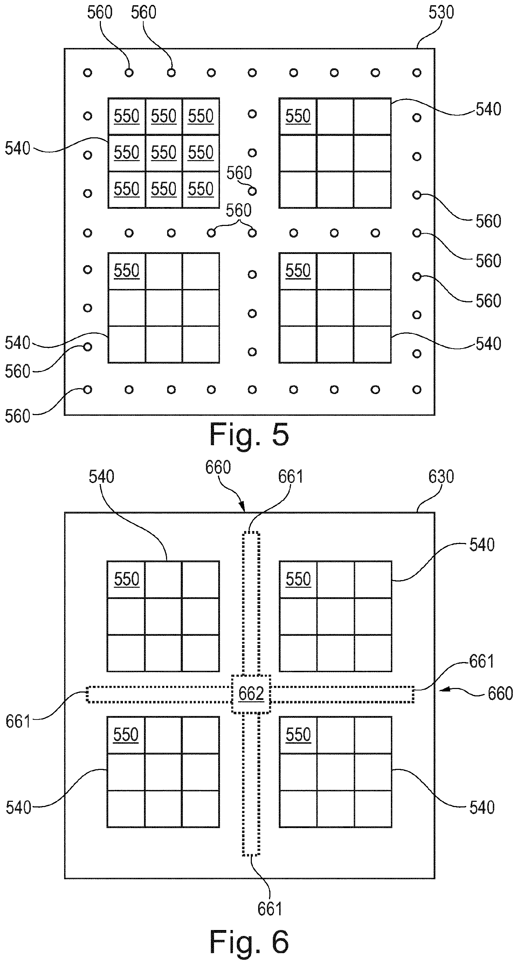

**Figure 5** shows a top view of a panel 530. According to the exemplary embodiment described here the panel 530 has a layout with four regions, which are called quarter panels 540. As can be seen from Figure 5, each quarter panel 540 comprises an array of nine component carriers 550 which, after the (lamination) processing of the entire panel 530 has been completed, can be obtained by means of a known singularization process.

In order to reduce the temperature variations in particular along a z-direction extending between the two heating plates 110 of the press book stack-up 100 shown in Figure 1, there are provided a plurality of thermal conduction structures 560 which at least partially penetrate the panel along the z-direction. For the sake of clarity it is pointed out that the described z-direction is perpendicular to the main surface of the panel 530, which main surface is defined by an x-direction and a y-direction. According to the exemplary embodiment described here the thermal conduction structures are (fully) metallized vias 560, which are preferably made from copper.

As can be taken from Figure 5, all thermal vias 560 are located in regions outside from the quarter panels 540. This may provide the advantage that the thermal vias 560 do not interfere with a possible electric conductor structure, e. g. electric conductor traces and/or electric vias, which may be present in or at the (multilayer) component carriers 550 in order to provide the necessary circuitry for electronic components of an electronic assembly. However, it is mentioned that in other embodiments also thermal vias may be located within or at least closer to the regions of the component carriers 550.

**Figure 6** shows a top view of a panel 630 which also comprises four quarter panels 540 each comprising an array of nine component carriers 550. According to the exemplary embodiment described here there are provided, at the main surface of the panel, several quasi two-dimensional thermal conduction structures 660 which improve the temperature equalization along the main plane of the panel 630, i. e. parallel to the plane of drawing.

As can be taken from Figure 6, the thermal conduction structures 660 include a thermal heat distribution pad 662 being located in the center of the main surface of the panel 630. Further, the thermal conduction structures 660 include (four) thermal traces 661, which are thermally coupled with the pad 662 and which allow for a heat flow from the center of the pad 662 towards the peripheral regions of the panel 630. Since in most scenarios the temperature in the center of the panel 630 is larger that at outside regions such a heat flow from the center outwards along the thermal traces 661 will result in a significant improvement of the temperature equalization along the main surface of the panel 630.

It is mentioned that depending on the specific application the shape of the thermal conduction structures can be different from the shape of the thermal heat distribution pad 662 together with the thermal traces 661 as depicted in Figure 6. For instance, the thermal conduction structures and in particular the central thermal heat distribution pad may comprise or may consist of for instance, but not limited to, at least one of (i) a circular portion, (ii) an elliptic portion, (iii) a rectangular portion, and (iii) a portrion being defined by a polygon. The specific shape of the thermal conduction structures may depend on the layout of the final component carrier.

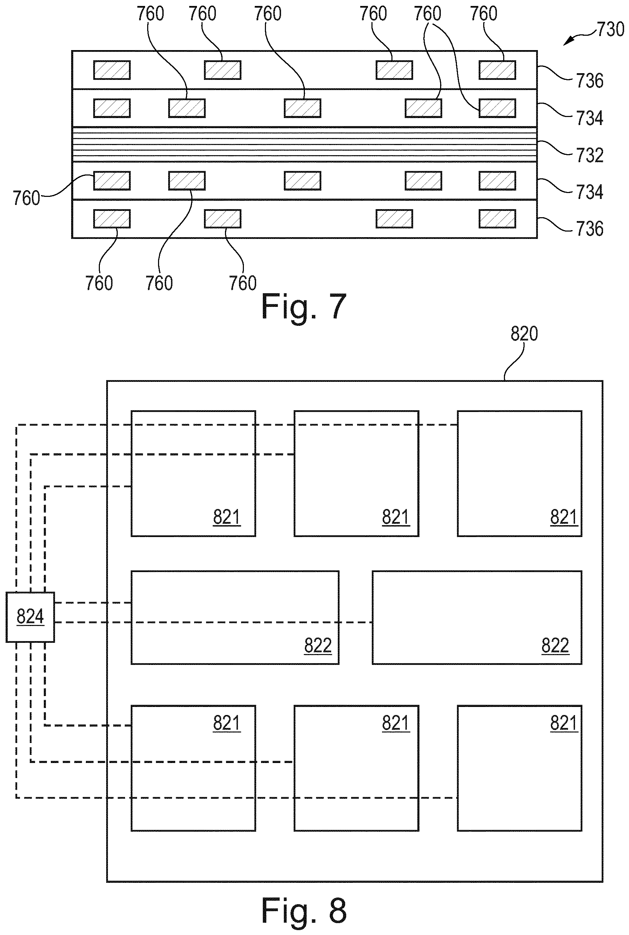

**Figure 7** shows in a cross sectional view a multilayer panel 730 which comprises an already cured central core 732. Above and below the core 732 there are formed two dielectric layers 734, which may have been at least partially cured from respectively a prepreg layer during a (former) lamination process. Hence, the dielectric layers 734 may be denominated "post laminated dielectric layers". Above the upper dielectric layer 734 and below the lower dielectric layer 734 there are provided two uncured or unlaminated dielectric layers 736. Correspondingly, these dielectric layers 736 may be denominated "pre laminated dielectric layers". Generally speaking, the dielectric layers 734 are dielectric layers, which have undergone at least one lamination step, in particular one lamination step more than the dielectric layers 736.

The multilayer panel 730 further comprises a plurality of thermal conduction blocks 760, which are embedded within the dielectric layers 734 and within the dielectric 736. According to the exemplary embodiment described here these blocks 760 are made from copper having a particular high thermal conductivity of about 400 W/mK.

It should be clear that the presence of these blocks 760 improves a desired temperature equalization. Thereby, the strength of the temperature equalization depends on the size of the blocks 760. The preferred direction of the temperature equalization depends on the shape and/or the orientation of the blocks 760.

The thermal blocks 760 arranged within the dielectric layers 734 had improved the temperature equalization during the already completed previous lamination process wherein former prepreg layers have been cured to the dielectric layers 734 and wherein the dielectric layers 736 were not yet present. The thermal blocks 760 arranged within the dielectric layers 736 will become effective during the following lamination process wherein also the prepreg layers 736 will be cured.

As can be taken from Figure 7, the number / the density of the thermal blocks 760 differs between the layers 734 and 736. The distribution of the thermal blocks 760 within different layers 734, 736 can be selected based on a prior knowledge of the thermal conduction within the entire press book stack-up. As has already been mentioned above, such an a priori knowledge can be obtained with thermal simulations and/or an evaluation of the warpage of previously manufactured component carriers. Thereby, artificial intelligence (AI) can be employed in order to obtain a knowledge of the relationship between different spatial distributions and spatial curing degree distributions and/or warpage of the final PCBs along certain directions.

As can be further taken from Figure 7, the density of the thermal conduction blocks 760 is larger in an outer region of the panel 730 as compared to the central region of the panel 730. This may allow, in most application cases, for a particular effective intra panel temperature homogenization during heat-assisted lamination.

**Figure 8** shows a top view of a separator sheet 820. The separator sheet 820 comprises several heating areas 821 and 822. According to the exemplary embodiment described here the heating areas 821, 822 comprise a resistive material which can be heated up with a current flow. As can be taken from Figure 8, the different resistive heating areas 821, 822 are individually electrically connected to a control unit 824. For the ease of illustration the electric connection between the control unit 824 and the respective heating areas 821, 822, which connection of course requires two wires, is only depicted schematically with a single dashed line.

The control unit 824 is configured for controlling the current through the heating areas 821, 822 for at least partially homogenizing the heat distribution in particular within a panel which is adjacent to the separator sheet 820. The layout of the heating areas can be adapted to the specific application for instance by taking into account the above described a priori knowledge based on thermal simulations and/or AI.

It should be noted that the term "comprising" does not exclude other elements or steps and the use of articles "a" or "an" does not exclude a plurality. Also elements described in association with different embodiments may be combined. It should also be noted that reference signs in the claims should not be construed as limiting the scope of the claims.

### List of reference signs:

- 100: press book stack-up
- 110: heating plates
- 112: paper cushion
- 120: separator sheets
- 130: panels

- T: Temperature in different locations on top/bottom heating plate
- ΔT: measured temperature differences
- ΔT1: measured temperature differences at top heating plate
- ΔT2: measured temperature differences at bottom heating plate
- ΔT3: temperature difference between heating plates

- P1: panel No. 1
- P11: panel No. 11
- P12: panel No. 12
- P22: panel No. 22

- 530: panel
- 540: quarter panel / component carrier array
- 550: component carrier / PCB
- 560: thermal conduction structures / thermal vias

- 630: panel
- 660: thermal conduction structures
- 661: thermal traces
- 662: thermal pad / heat distribution pad

- 730: panel
- 732: core
- 734: dielectric layer
- 736: uncured / unlaminated layer
- 760: thermal conduction structures / thermal blocks
- 820: separator sheet
- 821: active heating elements / areas
- 822: active heating elements / areas
- 824: control unit

## Claims

1. An arrangement for carrying out a thermal management during a heat- and pressure-induced lamination process of panels (130) in a press book stack-up (100) for manufacturing component carriers (550), wherein the press book stack-up (100) comprises
two heating plates (110);
a stack of a plurality of panels (130) placed between the heating plates (110);
a plurality of separator sheets (120) being located between adjacent panels (130) of the stack; and
a plurality of thermal conduction structures (560, 660, 760) arranged in and/or at the panels (130, 530, 630, 730); wherein
the thermal conduction structures (560, 660, 760) are configured so that a spatial temperature distribution within the respective panel (130, 530, 630, 730) and/or between different panels (130, 530, 630, 730) is at least partially changed.

2. The arrangement as set forth in the preceding claim, wherein
the thermal conduction structures (560, 660, 760) are configured so that a spatial temperature distribution within the respective panel (130, 530, 630, 730) and/or between different panels (130, 530, 630, 730) is at least partially homogenized.

3. The arrangement as set forth in any one of the preceding claims, wherein
the thermal conduction structures comprise thermal vias (661).

4. The arrangement as set forth in any one of the preceding claims, wherein
the thermal conduction structures comprise thermal traces (661) extending along one or both main surfaces of the panels (630).

5. The arrangement as set forth in any one of the preceding claims, wherein
the thermal conduction structures comprise thermal blocks (760) embedded in the panels (730).

6. The arrangement as set forth in any one of the preceding claims, wherein
the thermal conduction structures (560, 660, 760) within the stack have a spatial distribution which comprises
a first spatial distribution of thermal conduction structures (560, 660, 760) being assigned to a first panel (130) of the stack and
a second spatial distribution of thermal conduction structures (560, 660, 760) being assigned to a different second panel (130) of the stack, wherein the second spatial distribution is different from the first spatial distribution.

7. The arrangement as set forth in any one of the preceding claims, wherein
first thermal conduction structures (560, 660, 760) of at least one first layer of one panel and/or of a first panel differ in size, in shape, and/or in orientation from
second thermal conduction structures (560, 660, 760) of at least one second layer of the one panel and/or of a second panel.

8. The arrangement as set forth in any one of the preceding claims, wherein
a density of the thermal conduction structures (760) is larger in an outer region of a panel (730) as compared to a central region of the same panel (730).

9. The arrangement as set forth in any one of the preceding claims, wherein
a density of the thermal conduction structures (560, 660, 760) is larger in and/or at a panel (130, P11, P12) being located centrally in the stack as compared to a panel (130, P1, P22) being located closer to one of the heating plates (110).

10. The arrangement as set forth in any one of the preceding claims, wherein the arrangement comprises at least one of the following features
(A) a first density of the thermal conduction structures being located in first regions of the panels relating to the component carriers to be manufactured is larger than a second density of the thermal conduction structures being located in second regions of the panels, wherein the second regions are different from the first regions;
(B) at least a part of the thermal conduction structures (560) are arranged in regions of the panels (530) outside from the component carriers (550) to be manufactured, for instance in regions around and/or between arrays (540) of the panel with component carriers (550) to be manufactured.

11. The arrangement as set forth in any one of the preceding claims, wherein
the heating plates (110) and/or the separator sheets (120) are made at least partially from a material having a thermal conductivity of at least 100 W/mK, in particular at least 200 W/mK.

12. The arrangement as set forth in any one of the preceding claims, wherein
at least a part of the separator sheets (120, 820) comprises active heating means (821, 822); wherein in particular
the active heating (821, 822) means are arranged in the separator sheets (820) so that a peripheral portion of the separator sheets (820) is heated stronger than a central portion of the separator sheets (820).

13. The arrangement as set forth in any one of the two preceding claims, further comprising
a control unit (824) configured for controlling the active heating means (821, 822) individually for at least partially changing the heat distribution within the respective panels (130) and/or between different panels (130).

14. A method for carrying out a thermal management during a heat- and pressure-induced lamination process of panels (130) in a press book stack-up (100) for manufacturing component carriers (550), the method comprising
placing a stack of panels (130) between heating plates (110) of the press book stack-up (100) with separator sheets (120) between adjacent panels (130) of the stack; and
arranging thermal conduction structures (560, 660, 760) in and/or at the panels (130) so that during the lamination process a spatial temperature distribution within the respective panel (130) and/or between different panels (130) is at least partially changed by the thermal conduction structures. (560, 660, 760).

15. The method as set forth in the preceding claim, further comprising
simulating a temperature distribution in a respective one of the panels (130), and
controlling a manufacturing unit for manufacturing the panels (130) based on the simulated temperature distribution, wherein the manufacturing unit arranges the thermal conduction structures (560, 660, 760) within and/or at the respective panel (130) for changing the simulated temperature distribution.
